(19) Europäisches Patentamt
European Patent Office
Office européen des brevets

(11) **EP 3 166 025 A1**

(12) **EUROPEAN PATENT APPLICATION**

(43) Date of publication:
**10.05.2017 Bulletin 2017/19**

(51) Int Cl.:
***G06F 17/30*** (2006.01)    ***G06Q 50/00*** (2012.01)
***G06K 9/62*** (2006.01)

(21) Application number: **16169502.8**

(22) Date of filing: **13.05.2016**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**MA MD**

(30) Priority: **05.11.2015  US 201562251352 P
28.12.2015  US 201514981413
18.02.2016  PCT/US2016/018368**

(71) Applicant: **Facebook, Inc.
Menlo Park, CA 94025 (US)**

(72) Inventors:
• **Bourdev, Lubomir Dimitrov
Menlo Park, CA California 94025 (US)**
• **Paluri, Balmanohar
Menlo Park, CA California 94025 (US)**
• **Rippel, Oren
Menlo Park, CA California 94025 (US)**
• **Dollar, Piotr
Menlo Park, CA California 94025 (US)**

(74) Representative: **Schröer, Gernot H.
Meissner Bolte Patentanwälte
Rechtsanwälte Partnerschaft mbB
Bankgasse 3
90402 Nürnberg (DE)**

(54) **IDENTIFYING CONTENT ITEMS USING A DEEP-LEARNING MODEL**

(57)    In one embodiment, a method may include receiving a first content item. A first embedding of the first content item may be determined and may correspond to a first point in an embedding space. The embedding space may include a plurality of second points corresponding to a plurality of second embeddings of second content items. The embeddings are determined using a deep-learning model. The points are located in one or more clusters in the embedding space, which are each associated with a class of content items. Locations of points within clusters may be based on one or more attributes of the respective corresponding content items. Second content items that are similar to the first content item may be identified based on the locations of the first point and the second points and on particular clusters that the second points corresponding to the identified second content items are located in.

determine a first embedding of the first content item, where the first embedding corresponds to a first point in an embedding space that includes a plurality of second points corresponding to a plurality of second embeddings of second content items, the embeddings are determined using a deep-learning model, the points are located in clusters that are each associated with a class of content items, and the points are further located within the clusters based on attributes of the content items ⟶ 720

identify one or more second content items that are similar to the first content item based on the location of the first point, particular clusters that the one or more second points corresponding to the one or more second content items are located in, and the locations of the one or more second points corresponding to the one or more second content items within the particular clusters. ⟶ 730

*FIG. 7*

## Description

### PRIORITY

This application claims the benefit, under 35 U.S.C. § 119(e), of U.S. Provisional Patent Application No. 62/251352, filed 05 November 2015, which is incorporated herein by reference.

### TECHNICAL FIELD

This disclosure generally relates to training a deep-learning model.

### BACKGROUND

Deep-learning is a type of machine learning that may involve training a model in a supervised or unsupervised setting. Deep-learning models may be trained to learn representations of data. As an example and not by way of limitation, a deep-learning model may represent data as vectors of intensity values. Deep-learning models may be used in classification of data. Classification may involve determining which of a set of categories a data point belongs to by training the deep-learning model.

### SUMMARY OF PARTICULAR EMBODIMENTS

In particular embodiments, a system may use a deep-learning model to identify one or more content items that are similar to an inputted content item. The deep-learning model may be trained to map content items to embeddings in a multi-dimensional embedding space. Each embedding may correspond to coordinates of a point in the embedding space. The deep-learning model may be trained to generate embeddings of content items so that content items belonging to the same class are located in the same cluster of points in the embedding space. The deep-learning model may be further trained to generate embeddings of content items that place the content items at particular locations within clusters based on one or more attributes of the content items.

The embeddings of content items may be used to accomplish any number of suitable tasks. As an example and not by way of limitation, a system may employ a search algorithm to identify one or more embeddings of content items as proximate to a search query in the embedding space. The system may determine that the content items of the identified embeddings are similar to the search query. In particular embodiments, the content items may be identified in response to a received search query inputted by the user at a client system. The identified content items may be displayed to the user as suggestions on an interface of an application running on the client system (e.g., a messaging platform, an application associated with a social-networking system, or any other suitable application).

In particular embodiments, second content items may be identified (e.g., in response to a search query that includes a first content item) and may have embeddings in the embedding space that are proximate to a first content item (e.g., the identified second content items may be entities or data objects that are relevant and/or similar to the first content item). The identified second content items may be cached or pre-cached. As an example and not by way of limitation, the identified second content items that are close to the first content item may be individually cached or pre-cached for one or more users or one or more client systems. The caching or pre-caching may be implemented or performed at the server-side or at the client-side for, as an example and not by way of limitation, one or more particular users or for each of the users. Caching or pre-caching may allow for the content items to be accessed faster. As an example and not by way of limitation, the content items (e.g., identified second content items that are relevant or similar to the first content item) may be quickly accessed if the respective user requests them or if a server pushes a recommendation (e.g., the identified second content items) to the user (e.g., to a client system of the user). By using the proposed method, it is possible to identify content items (e.g., data objects stored within one or more databases of a computing system—as an example and not by way of limitation, a social networking system) that are relevant to a first content item that was obtained or received, as an example and not by way of limitation, as a search query from a user or client system. Identified second content items may each be associated with a probability of being accessed. In particular embodiments, second content items may be selected based on the probability of being accessed exceeding a certain minimum probability. Caching or pre-caching such content items or objects may be effective in avoiding useless caching and/or in reducing data traffic and/or in improving the speed or access time for accessing respective content items or data objects. Amongst all possible content items (e.g., billions of content items), only a subset of the content items may be found relevant in each search. By using the proposed method, the subset of relevant content items may be sent to the client system or cached or pre-cached by the client system. Relevant content items, including, as an example and not by way of limitation, second content items determined to be similar to a first content item (e.g. proximate to the first content item in the embedding space), a first content item, may be quickly obtained and/or identified by executing a search (*e.g.*, a distance search) in the embedding space. In particular embodiments, clustering of entities may be based on the respective database used. In other words, the clustering may be database specific. Clustering of relevant entities may be carried out, as an example and not by way of limitation, for one or more users of the social networking system based on the proposed method.

In particular embodiments, the content items, the information associated with content items, or both, may be stored as data objects, as an example and not by way of limitation, in one or more databases or data stores. These databases or data stores may be, as an example and not by way of limitation, in one or more data centers, which might be geographically distributed (*e.g.*, in different locations, cities, countries and/or continents). In particular embodiments, an embedding space may be used to make predictions of relevance of one or more content items with respect to one or more particular users, each user, one or more users of a social networking system, or any combination thereof, and the users may each be located within a respective geographical location. Content items predicted to be of relevance and corresponding information may be stored, based on the determined relevance, in a database located closer in distance to the one or more users. The content items determined to be relevant and the associated information may also be pre-cached or cached, as an example and not by way of limitation, on one or more client systems, one or more servers, or any combination thereof, which are located close in distance to the geographical location of the one or more users or client systems. Such embodiments may be effective in reducing the load and/or data traffic between remote databases and/or data centers. These embodiments may also improve (*e.g.*, reduce) access times (*e.g.*, for accessing particular content items).

In particular embodiments, the content items may further be clustered or re-clustered. Clustering may lead to faster search results (*i.e.* to a reduction of the search time and thereby to a reduction in the load of search engines) and/or to less data traffic across corresponding data networks. Clusters may be stored across data stores based on their positions or location in the embedding space. This storage scheme may improve data access times and/or search times. As an example and not by way of limitation, storing clusters of content items across data stores based on their respective locations in the embedding space may result in a search engine being able to visit fewer data stores in order to retrieve relevant results. Additionally, by clustering embeddings, search results retrieved from the embedding space may be more accurate/specific as compared to applications retrieving search results from an embedding space where no clustering is performed, because the search results may be additionally based on attributes of the entities and not only on a general high-level classification. A client system may not have to continue submitting more and more refined searches in order to get adequate search results for the user, which means that the number and intensity of interactions between client system and server may be reduced. Additionally, the clustering may provide for more diversified search results, as search results from different clusters may be pulled in to the search results intentionally. Even though particular embodiments are described in which the determination of embeddings is performed by a server, this is by way of example, not by way of limitation, and a client system may determine some or all of the embeddings of content items in the embedding space. As an example and not by way of limitation, a content item may be visual content, and pre-processing of the visual content may be performed on or by the client system (*e.g.*, determining one or more attributes of the visual content). The user may then be presented (*e.g.*, at an interface of the client system) with one or more search terms corresponding to the visual content (*e.g.*, each search term being based on one or more attributes of the visual content).The user may then be prompted to confirm the search terms (*e.g.*, by the client system or server issuing the respective prompt).

The embodiments disclosed herein are only examples, and the scope of this disclosure is not limited to them. Particular embodiments may include all, some, or none of the components, elements, features, functions, operations, or steps of the embodiments disclosed herein. Embodiments according to the invention are in particular disclosed in the attached claims directed to a method, a storage medium, a system and a computer program product, wherein any feature mentioned in one claim category, *e.g.*, method, can be claimed in another claim category, *e.g.,* system, as well. The dependencies or references back in the attached claims are chosen for formal reasons only. However any subject matter resulting from a deliberate reference back to any previous claims (in particular multiple dependencies) can be claimed as well, so that any combination of claims and the features thereof are disclosed and can be claimed regardless of the dependencies chosen in the attached claims. The subject-matter which can be claimed comprises not only the combinations of features as set out in the attached claims but also any other combination of features in the claims, wherein each feature mentioned in the claims can be combined with any other feature or combination of other features in the claims. Furthermore, any of the embodiments and features described or depicted herein can be claimed in a separate claim and/or in any combination with any embodiment or feature described or depicted herein or with any of the features of the attached claims.

In an embodiment according to the invention, a computer-implemented method may comprise:

receiving, by one or more computing devices, a first content item;
determining, by one or more computing devices, a first embedding of the first content item, wherein:

the first embedding corresponds to a first point in an embedding space,
the embedding space comprises a plurality of second points corresponding to a plurality of second embeddings of second content items,
the first and second embeddings are determined using a deep-learning model,
the first and second points are located in one or more clusters in the embedding space,
each of the clusters is associated with a class of content items, and
the first and second points are further located within the clusters based on one or more attributes of the first and second content items; and
identifying, by one or more computing devices, one or more of the second content items that are similar to the first content item based on:

the location of the first point,
one or more particular clusters that the one or more second points corresponding to the one or more second content items are located in, and
the locations of the one or more second points corresponding to the one or more second content items within the particular clusters.

The deep-learning model in embodiments may be a machine-learning model, a neural network, a latent neural network, any other suitable deep-learning model, or any combination thereof. In embodiments, the deep-learning model may have a plurality of layers of abstraction, wherein inputs may be any suitable number of content items, and wherein outputs may be one or more embeddings of content items.

The embedding space may be a multi-dimensional space, *e.g.*, *d*-dimensional, where *d* is a hyper-parameter that controls capacity (*e.g.*, a natural number), and wherein the embedding space may include a plurality of points corresponding to embeddings of content items. As used herein, an embedding of a content item refers to a representation of a content item in the embedding space.

In particular embodiments, the deep-learning model, *e.g.*, a neural network, may include one or more indices that map content items to vectors in $\mathbb{R}^d$ , where $\mathbb{R}$ denotes the set of real numbers, and *d* is a hyper-parameter that controls capacity, for example a natural number. The vectors may be *d*-dimensional intensity vectors. As used herein, intensity values may be any suitable values in the range of -1 to 1. Each of the vector representations of content items may provide coordinates for respective points in the embedding space.

In particular embodiments, clusters with which the second content items are associated (*i.e.*, located in) may be stored across more than one data store, depending, as an example and not by way of limitation, on the respective positions of the clusters in the embedding space. In particular, the clustering may have the advantage that a corresponding search engine, having received the first content item (*e.g.*, in a search query), may focus on a limited number of data stores. That is, the search engine may not have to go to as many data stores to retrieve relevant results (*e.g.*, second content items that are similar to the first content item). This may reduce the load of search engine. This may also result in reduced data transfer rates.

In particular embodiments, clustering maybe used to provide diversified search results. For example search results may be intentionally be pulled from different clusters in order to diversify the search result.

In particular embodiments, embeddings of content items in the embedding space may be determined by one or more servers. In particular embodiments, embeddings of content items may be determined by one or more client systems. As an example and not by way of limitation, pre-processing of any suitable type of content (*e.g.*, visual content), may be performed, in whole or in part, by the client system. As another example and not by way of limitation, the client system may determine one or more attributes of content items (*e.g.*, visual content items).

In particular embodiments, the embeddings and clustering may be used to store corresponding content items in one or more databases. These one or more databases may be, as an example and not by way of limitation, data centers including one or more interconnected databases. The content items may be stored in the one or more databases based on predicted or determined probabilities of relevance to users or other entities within a certain geographical location. The content items may also be stored in the one or more databases based on similarities between the content items and content items associated with a certain geographical location.

In particular embodiments, the embedding space may be used to determine probabilities of relevance to or similarity values for second content items with respect to a given first content item (*e.g.*, based on proximity between content items in the embedding space or based on content items being in the same cluster in the embedding space). How the content items are stored in the one or more databases (*i.e.*, which content items are to be stored in which database) may be determined based on the determined probabilities or similarity values. As an example and not by way of limitation, for example based on user and/or geography-specific predictions.

The accuracy of using an embedding space for the determination of similarities between content items may improve data access times. The embeddings may also be effective in reducing search time (*e.g.*, by search engines). In particular, the classification and/or storage according to similarities as determined from embedding space, and in particular clustering according to determined similarities may lead to faster search times, less data traffic, and to a reduction in the system load of respective search engines and related databases.

Embodiments of the invention may also relate to a method of operating a computer-implemented search engine for searching and/or retrieving content items in one or more electronic databases, the content items associated with data objects stored in the one or more databases. The method of operating the search engine may involve a method as mentioned above, including any embodiment thereof as described herein, wherein the method in which one or more of the second content items that are similar to the first content item are determined may be used for identifying search results in the one or more electronic databases, and based on determined similar second content items, a search result, in particular a search result page, may be generated and provided for display on a display device associated with a querying user, for example. In particular, the first content item may represent a search query or search term received by the one or more computing devices, and the one or more second content items determined to be similar to the first content item may be used as a search result, or used for the generation of a search result in response to receiving the first content item.

In particular embodiments, determining, as an example and not by way of limitation, search results based on similarity between content items in a multi-dimensional embedding space may improve the speed and/or accuracy of a search for a particular content item in an electronic database that includes one or more different databases.

Search results generated by respective search engines operating in accordance with the proposed method may be more accurate and/or specific, at least because the search results may not be based just on a high-level class, as may be the case with known search algorithms, but they may also be based on the attributes of the content items to be searched. Thus, a client system may not have to continue submitting more and more refined searches in order to get the search results that a user seeks, or in other words, that the number of searches to be submitted to the search engine may be greatly reduced. This, in particular, is suitable to reduce system load in particular interactions between client system and server.

The deep-learning model may be trained using a loss function that reduces overlap between points located in the one or more clusters.

The one or more attributes of the first and second content items may be latent input variables of the deep-learning model.

The deep-learning model may be a neural network.

In particular embodiments, according to the invention, the method may comprise: generating, based on the identified one or more second content items, a search result and providing the search result for display on a display device associated with a querying user; and/or the further step of storing the first content item in accordance with a cluster associated with the identified one or more second content items and/or comprising the step of caching or pre-caching one or more of the identified second content items on a client device associated with a user and/or on a server, and/or further comprising the step of re-clustering content items, in particular selected from the identified one or more second content items, based on the identified similar second content items.

The first content item and the second content items may each be visual content, and the one or more attributes of the first and second content items may comprise one or more of color, pose, lighting conditions, scene geometry, material, texture, size, and granularity.

The first content item may be a search query received at a client system of a user.

In an embodiment according to the invention the method further may comprise sending, to the client system, the one or more identified second content items for display to the user.

A type of content of the first content item may comprise one or more of text content, image content, audio content, and video content.

In an embodiment according to the invention the method further may comprise determining the type of content of the first content item, and identifying one or more of the second content items may further be based on the type of content of the first content item.

In an embodiment according to the invention one or more computer-readable non-transitory storage media may embody software that is operable when executed to:

receive a first content item;
determine a first embedding of the first content item, wherein:

the first embedding corresponds to a first point in an embedding space,
the embedding space comprises a plurality of second points corresponding to a plurality of second embeddings of second content items,
the first and second embeddings are determined using a deep-learning model,

the first and second points are located in one or more clusters in the embedding space,

each of the clusters is associated with a class of content items, and

the first and second points are further located within the clusters based on one or more attributes of the first and second content items; and

identify one or more of the second content items that are similar to the first content item based on:

the location of the first point,

one or more particular clusters that the one or more second points corresponding to the one or more second content items are located in, and

the locations of the one or more second points corresponding to the one or more second content items within the particular clusters.

The deep-learning model may be trained using a loss function that reduces overlap between points located in the one or more clusters.

The one or more attributes of the first and second content items may be latent input variables of the deep-learning model.

The first content item and the second content items may each be visual content, and the one or more attributes of the first and second content items may comprise one or more of color, pose, lighting conditions, scene geometry, material, texture, size, and granularity.

The first content item may be a search query received at a client system of a user.

In an embodiment according to the invention, a system may comprise: one or more processors; and a memory coupled to the processors comprising instructions executable by the processors, the processors operable when executing the instructions to:

receive a first content item;

determine a first embedding of the first content item, wherein:

the first embedding corresponds to a first point in an embedding space,

the embedding space comprises a plurality of second points corresponding to a plurality of second embeddings of second content items,

the first and second embeddings are determined using a deep-learning model,

the first and second points are located in one or more clusters in the embedding space,

each of the clusters is associated with a class of content items, and

the first and second points are further located within the clusters based on one or more attributes of the first and second content items; and

identify one or more of the second content items that are similar to the first content item based on:

the location of the first point,

one or more particular clusters that the one or more second points corresponding to the one or more second content items are located in, and

the locations of the one or more second points corresponding to the one or more second content items within the particular clusters.

The deep-learning model may be trained using a loss function that reduces overlap between points located in the one or more clusters.

The one or more attributes of the first and second content items may be latent input variables of the deep-learning model.

The first content item and the second content items may each be visual content, and the one or more attributes of the first and second content items may comprise one or more of color, pose, lighting conditions, scene geometry, material, texture, size, and granularity.

The first content item may be a search query received at a client system of a user.

In a further embodiment according to the invention, one or more computer-readable non-transitory storage media embody software that is operable when executed to perform a method according to the invention or any of the above mentioned embodiments.

In a further embodiment according to the invention, a system comprises: one or more processors; and at least one memory coupled to the processors and comprising instructions executable by the processors, the processors operable when executing the instructions to perform a method according to the invention or any of the above mentioned embodiments.

In a further embodiment according to the invention, a computer program product, preferably comprising a computer-readable non-transitory storage media, is operable when executed on a data processing system to perform a method according to the invention or any of the above mentioned embodiments.

## BRIEF DESCRIPTION OF THE DRAWINGS

**FIG. 1** illustrates an example network environment associated with a social-networking system.
**FIG. 2** illustrates an example social graph.
**FIG. 3** illustrates an example deep-learning model.
**FIG. 4** illustrates an example view of an embedding space generated using a deep-learning model.
**FIG. 5** illustrates an example method for identifying similar content items in an embedding space.
**FIG. 6** illustrates an example view of an embedding space.
**FIG. 7** illustrates an example method for identifying second content items that are similar to a first content item.
**FIG. 8** illustrates an example computer system.

## DESCRIPTION OF EXAMPLE EMBODIMENTS

System Overview

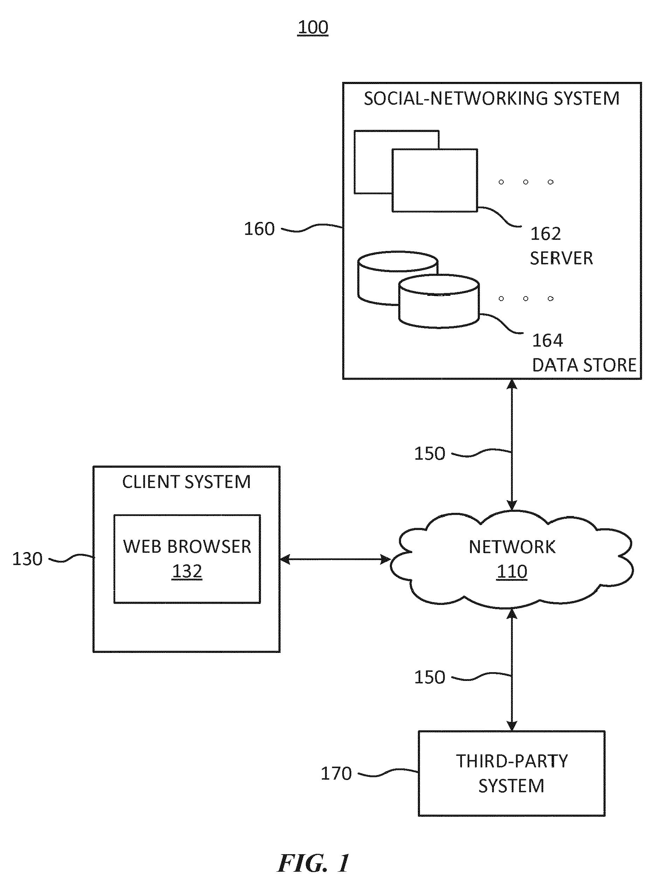

FIG. 1 illustrates an example network environment 100 associated with a social-networking system. Network environment 100 includes a client system 130, a social-networking system 160, and a third-party system 170 connected to each other by a network 110. Although FIG. 1 illustrates a particular arrangement of client system 130, social-networking system 160, third-party system 170, and network 110, this disclosure contemplates any suitable arrangement of client system 130, social-networking system 160, third-party system 170, and network 110. As an example and not by way of limitation, two or more of client system 130, social-networking system 160, and third-party system 170 may be connected to each other directly, bypassing network 110. As another example, two or more of client system 130, social-networking system 160, and third-party system 170 may be physically or logically co-located with each other in whole or in part. Moreover, although FIG. 1 illustrates a particular number of client systems 130, social-networking systems 160, third-party systems 170, and networks 110, this disclosure contemplates any suitable number of client systems 130, social-networking systems 160, third-party systems 170, and networks 110. As an example and not by way of limitation, network environment 100 may include multiple client system 130, social-networking systems 160, third-party systems 170, and networks 110.

This disclosure contemplates any suitable network 110. As an example and not by way of limitation, one or more portions of network 110 may include an ad hoc network, an intranet, an extranet, a virtual private network (VPN), a local area network (LAN), a wireless LAN (WLAN), a wide area network (WAN), a wireless WAN (WWAN), a metropolitan area network (MAN), a portion of the Internet, a portion of the Public Switched Telephone Network (PSTN), a cellular telephone network, or a combination of two or more of these. Network 110 may include one or more networks 110.

Links 150 may connect client system 130, social-networking system 160, and third-party system 170 to communication network 110 or to each other. This disclosure contemplates any suitable links 150. In particular embodiments, one or more links 150 include one or more wireline (such as for example Digital Subscriber Line (DSL) or Data Over Cable Service Interface Specification (DOCSIS)), wireless (such as for example Wi-Fi or Worldwide Interoperability for Microwave Access (WiMAX)), or optical (such as for example Synchronous Optical Network (SONET) or Synchronous Digital Hierarchy (SDH)) links. In particular embodiments, one or more links 150 each include an ad hoc network, an intranet, an extranet, a VPN, a LAN, a WLAN, a WAN, a WWAN, a MAN, a portion of the Internet, a portion of the PSTN, a cellular technology-based network, a satellite communications technology-based network, another link 150, or a combination of two or more such links 150. Links 150 need not necessarily be the same throughout network environment 100. One or more first links 150 may differ in one or more respects from one or more second links 150.

In particular embodiments, client system 130 may be an electronic device including hardware, software, or embedded logic components or a combination of two or more such components and capable of carrying out the appropriate functionalities implemented or supported by client system 130. As an example and not by way of limitation, a client system 130 may include a computer system such as a desktop computer, notebook or laptop computer, netbook, a tablet computer, e-book reader, GPS device, camera, personal digital assistant (PDA), handheld electronic device, cellular telephone, smartphone, augmented/virtual reality device, other suitable electronic device, or any suitable combination thereof. This disclosure contemplates any suitable client systems 130. A client system 130 may enable a network user at client system 130 to access network 110. A client system 130 may enable its user to communicate with other users at other client systems 130.

In particular embodiments, client system 130 may include a web browser 132, such as MICROSOFT INTERNET EXPLORER, GOOGLE CHROME or MOZILLA FIREFOX, and may have one or more add-ons, plug-ins, or other extensions, such as TOOLBAR or YAHOO TOOLBAR. A user at client system 130 may enter a Uniform Resource Locator (URL) or other address directing the web browser 132 to a particular server (such as server 162, or a server associated with a third-party system 170), and the web browser 132 may generate a Hyper Text Transfer Protocol (HTTP) request and communicate the HTTP request to server. The server may accept the HTTP request and communicate to client system 130 one or more Hyper Text Markup Language (HTML) files responsive to the HTTP request. Client system 130 may render a webpage based on the HTML files from the server for presentation to the user. This disclosure contemplates any suitable webpage files. As an example and not by way of limitation, webpages may render from HTML files, Extensible Hyper Text Markup Language (XHTML) files, or Extensible Markup Language (XML) files, according to particular needs. Such pages may also execute scripts such as, for example and without limitation, those written in JAVASCRIPT, JAVA, MICROSOFT SILVERLIGHT, combinations of markup language and scripts such as AJAX (Asynchronous JAVASCRIPT and XML), and the like. Herein, reference to a webpage encompasses one or more corresponding webpage files (which a browser may use to render the webpage) and vice versa, where appropriate.

In particular embodiments, social-networking system 160 may be a network-addressable computing system that can host an online social network. Social-networking system 160 may generate, store, receive, and send social-networking data, such as, for example, user-profile data, concept-profile data, social-graph information, or other suitable data related to the online social network. Social-networking system 160 may be accessed by the other components of network environment 100 either directly or via network 110. In particular embodiments, social-networking system 160 may include one or more servers 162. Each server 162 may be a unitary server or a distributed server spanning multiple computers or multiple datacenters. Servers 162 may be of various types, such as, for example and without limitation, web server, news server, mail server, message server, advertising server, file server, application server, exchange server, database server, proxy server, another server suitable for performing functions or processes described herein, or any combination thereof. In particular embodiments, each server 162 may include hardware, software, or embedded logic components or a combination of two or more such components for carrying out the appropriate functionalities implemented or supported by server 162. In particular embodiments, social-networking system 160 may include one or more data stores 164. Data stores 164 may be used to store various types of information. In particular embodiments, the information stored in data stores 164 may be organized according to specific data structures. In particular embodiments, each data store 164 may be a relational, columnar, correlation, or other suitable database. Although this disclosure describes or illustrates particular types of databases, this disclosure contemplates any suitable types of databases. Particular embodiments may provide interfaces that enable a client system 130, a social-networking system 160, or a third-party system 170 to manage, retrieve, modify, add, or delete, the information stored in data store 164.

In particular embodiments, social-networking system 160 may store one or more social graphs in one or more data stores 164. In particular embodiments, a social graph may include multiple nodes—which may include multiple user nodes (each corresponding to a particular user) or multiple concept nodes (each corresponding to a particular concept)—and multiple edges connecting the nodes. Social-networking system 160 may provide users of the online social network the ability to communicate and interact with other users. In particular embodiments, users may join the online social network via social-networking system 160 and then add connections (*e.g.*, relationships) to a number of other users of social-networking system 160 to whom they want to be connected. Herein, the term "friend" may refer to any other user of social-networking system 160 with whom a user has formed a connection, association, or relationship via social-networking system 160.

In particular embodiments, social-networking system 160 may provide users with the ability to take actions on various types of items or objects, supported by social-networking system 160. As an example and not by way of limitation, the items and objects may include groups or social networks to which users of social-networking system 160 may belong, events or calendar entries in which a user might be interested, computer-based applications that a user may use, transactions that allow users to buy or sell items via the service, interactions with advertisements that a user may perform, or other suitable items or objects. A user may interact with anything that is capable of being represented in social-networking system 160 or by an external system of third-party system 170, which is separate from social-networking system 160 and coupled to social-networking system 160 via a network 110.

In particular embodiments, social-networking system 160 may be capable of linking a variety of entities. As an example and not by way of limitation, social-networking system 160 may enable users to interact with each other as well as receive content from third-party systems 170 or other entities, or to allow users to interact with these entities through an application programming interfaces (API) or other communication channels.

In particular embodiments, a third-party system 170 may include one or more types of servers, one or more data stores, one or more interfaces, including but not limited to APIs, one or more web services, one or more content sources, one or more networks, or any other suitable components, *e.g.*, with which servers may communicate. A third-party system 170 may be operated by a different entity from an entity operating social-networking system 160. In particular embodiments, however, social-networking system 160 and third-party systems 170 may operate in conjunction with each other to provide social-networking services to users of social-networking system 160 or third-party systems 170. In this sense, social-networking system 160 may provide a platform, or backbone, which other systems, such as third-party systems 170, may use to provide social-networking services and functionality to users across the Internet.

In particular embodiments, a third-party system 170 may include a third-party content object provider. A third-party content object provider may include one or more sources of content objects, which may be communicated to a client system 130. As an example and not by way of limitation, content objects may include information regarding things or activities of interest to the user, such as, for example, movie show times, movie reviews, restaurant reviews, restaurant menus, product information and reviews, or other suitable information. As another example and not by way of limitation, content objects may include incentive content objects, such as coupons, discount tickets, gift certificates, or other suitable incentive objects.

In particular embodiments, social-networking system 160 also includes user-generated content objects, which may enhance a user's interactions with social-networking system 160. User-generated content may include anything a user can add, upload, send, or "post" to social-networking system 160. As an example and not by way of limitation, a user communicates posts to social-networking system 160 from a client system 130. Posts may include data such as status updates or other textual data, location information, photos, videos, links, music or other similar data or media. Content may also be added to social-networking system 160 by a third-party through a "communication channel," such as a newsfeed or stream.

In particular embodiments, social-networking system 160 may include a variety of servers, sub-systems, programs, modules, logs, and data stores. In particular embodiments, social-networking system 160 may include one or more of the following: a web server, action logger, API-request server, relevance-and-ranking engine, content-object classifier, notification controller, action log, third-party-content-object-exposure log, inference module, authorization/privacy server, search module, advertisement-targeting module, user-interface module, user-profile store, connection store, third-party content store, or location store. Social-networking system 160 may also include suitable components such as network interfaces, security mechanisms, load balancers, failover servers, management-and-network-operations consoles, other suitable components, or any suitable combination thereof. In particular embodiments, social-networking system 160 may include one or more user-profile stores for storing user profiles. A user profile may include, for example, biographic information, demographic information, behavioral information, social information, or other types of descriptive information, such as work experience, educational history, hobbies or preferences, interests, affinities, or location. Interest information may include interests related to one or more categories. Categories may be general or specific. As an example and not by way of limitation, if a user "likes" an article about a brand of shoes the category may be the brand, or the general category of "shoes" or "clothing." A connection store may be used for storing connection information about users. The connection information may indicate users who have similar or common work experience, group memberships, hobbies, educational history, or are in any way related or share common attributes. The connection information may also include user-defined connections between different users and content (both internal and external). A web server may be used for linking social-networking system 160 to one or more client systems 130 or one or more third-party system 170 via network 110. The web server may include a mail server or other messaging functionality for receiving and routing messages between social-networking system 160 and one or more client systems 130. An API-request server may allow a third-party system 170 to access information from social-networking system 160 by calling one or more APIs. An action logger may be used to receive communications from a web server about a user's actions on or off social-networking system 160. In conjunction with the action log, a third-party-content-object log may be maintained of user exposures to third-party-content objects. A notification controller may provide information regarding content objects to a client system 130. Information may be pushed to a client system 130 as notifications, or information may be pulled from client system 130 responsive to a request received from client system 130. Authorization servers may be used to enforce one or more privacy settings of the users of social-networking system 160. A privacy setting of a user determines how particular information associated with a user can be shared. The authorization server may allow users to opt in to or opt out of having their actions logged by social-networking system 160 or shared with other systems (*e.g.*, third-party system 170), such as, for example, by setting appropriate privacy settings. Third-party-content-object stores may be used to store content objects received from third parties, such as a third-party system 170. Location stores may be used for storing location information received from client systems 130 associated with users. Advertisement-pricing modules may combine social information, the current time, location information, or other suitable information to provide relevant advertisements, in the form of notifications, to a user.

Social Graphs

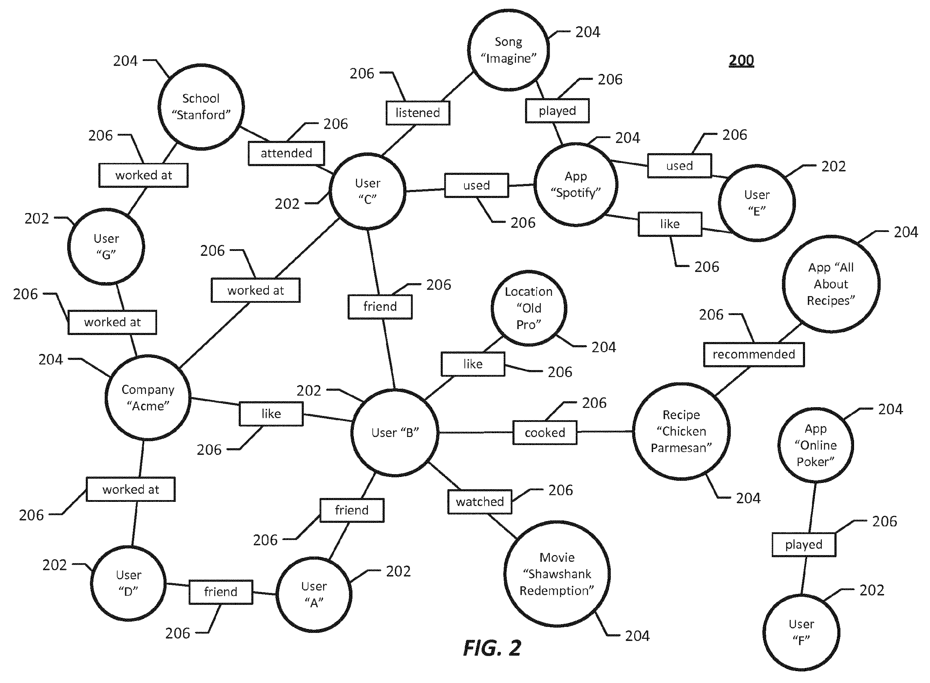

FIG. 2 illustrates example social graph 200. In particular embodiments, social-networking system 160 may store one or more social graphs 200 in one or more data stores. In particular embodiments, social graph 200 may include multiple nodes—which may include multiple user nodes 202 or multiple concept nodes 204—and multiple edges 206 connecting the nodes. Example social graph 200 illustrated in FIG. 2 is shown, for didactic purposes, in a two-dimensional visual map representation. In particular embodiments, a social-networking system 160, client system 130, or third-party system 170 may access social graph 200 and related social-graph information for suitable applications. The nodes and edges of social graph 200 may be stored as data objects, for example, in a data store (such as a social-graph database). Such a data store may include one or more searchable or queryable indexes of nodes or edges of social graph 200.

In particular embodiments, a user node 202 may correspond to a user of social-networking system 160. As an example and not by way of limitation, a user may be an individual (human user), an entity (*e.g.*, an enterprise, business, or third-party application), or a group (*e.g.*, of individuals or entities) that interacts or communicates with or over social-networking system 160. In particular embodiments, when a user registers for an account with social-networking system 160, social-networking system 160 may create a user node 202 corresponding to the user, and store the user node 202 in one or more data stores. Users and user nodes 202 described herein may, where appropriate, refer to registered users and user nodes 202 associated with registered users. In addition or as an alternative, users and user nodes 202 described herein may, where appropriate, refer to users that have not registered with social-networking system 160. In particular embodiments, a user node 202 may be associated with information provided by a user or information gathered by various systems, including social-networking system 160. As an example and not by way of limitation, a user may provide his or her name, profile picture, contact information, birth date, sex, marital status, family status, employment, education background, preferences, interests, or other demographic information. In particular embodiments, a user node 202 may be associated with one or more data objects corresponding to information associated with a user. In particular embodiments, a user node 202 may correspond to one or more webpages.

In particular embodiments, a concept node 204 may correspond to a concept. As an example and not by way of limitation, a concept may correspond to a place (such as, for example, a movie theater, restaurant, landmark, or city); a website (such as, for example, a website associated with social-network system 160 or a third-party website associated with a web-application server); an entity (such as, for example, a person, business, group, sports team, or celebrity); a resource (such as, for example, an audio file, video file, digital photo, text file, structured document, or application) which may be located within social-networking system 160 or on an external server, such as a web-application server; real or intellectual property (such as, for example, a sculpture, painting, movie, game, song, idea, photograph, or written work); a game; an activity; an idea or theory; an object in a augmented/virtual reality environment; another suitable concept; or two or more such concepts. A concept node 204 may be associated with information of a concept provided by a user or information gathered by various systems, including social-networking system 160. As an example and not by way of limitation, information of a concept may include a name or a title; one or more images (*e.g.*, an image of the cover page of a book); a location (*e.g.*, an address or a geographical location); a website (which may be associated with a URL); contact information (*e.g.*, a phone number or an email address); other suitable concept information; or any suitable combination of such information. In particular embodiments, a concept node 204 may be associated with one or more data objects corresponding to information associated with concept node 204. In particular embodiments, a concept node 204 may correspond to one or more webpages.

In particular embodiments, a node in social graph 200 may represent or be represented by a webpage (which may be referred to as a "profile page"). Profile pages may be hosted by or accessible to social-networking system 160. Profile pages may also be hosted on third-party websites associated with a third-party server 170. As an example and not by way of limitation, a profile page corresponding to a particular external webpage may be the particular external webpage and the profile page may correspond to a particular concept node 204. Profile pages may be viewable by all or a selected subset of other users. As an example and not by way of limitation, a user node 202 may have a corresponding user-profile page in which the corresponding user may add content, make declarations, or otherwise express himself or herself. As another example and not by way of limitation, a concept node 204 may have a corresponding concept-profile page in which one or more users may add content, make declarations, or express themselves, particularly in relation to the concept corresponding to concept node 204.

In particular embodiments, a concept node 204 may represent a third-party webpage or resource hosted by a third-party system 170. The third-party webpage or resource may include, among other elements, content, a selectable or other icon, or other inter-actable object (which may be implemented, for example, in JavaScript, AJAX, or PHP codes) representing an action or activity. As an example and not by way of limitation, a third-party webpage may include a selectable icon such as "like," "check-in," "eat," "recommend," or another suitable action or activity. A user viewing the third-party webpage may perform an action by selecting one of the icons (*e.g.*, "check-in"), causing a client system 130 to send to social-networking system 160 a message indicating the user's action. In response to the message, social-networking system 160 may create an edge (*e.g.*, a check-in-type edge) between a user node 202 corresponding to the user and a concept node 204 corresponding to the third-party webpage or resource and store edge 206 in one or more data stores.

In particular embodiments, a pair of nodes in social graph 200 may be connected to each other by one or more edges 206. An edge 206 connecting a pair of nodes may represent a relationship between the pair of nodes. In particular embodiments, an edge 206 may include or represent one or more data objects or attributes corresponding to the relationship between a pair of nodes. As an example and not by way of limitation, a first user may indicate that a second user is a "friend" of the first user. In response to this indication, social-networking system 160 may send a "friend request" to the second user. If the second user confirms the "friend request," social-networking system 160 may create an edge 206 connecting the first user's user node 202 to the second user's user node 202 in social graph 200 and store edge 206 as social-graph information in one or more of data stores 164. In the example of FIG. 2, social graph 200 includes an edge 206 indicating a friend relation between user nodes 202 of user "A" and user "B" and an edge indicating a friend relation between user nodes 202 of user "C" and user "B." Although this disclosure describes or illustrates particular edges 206 with particular attributes connecting particular user nodes 202, this disclosure contemplates any suitable edges 206 with any suitable attributes connecting user nodes 202. As an example and not by way of limitation, an edge 206 may represent a friendship, family relationship, business or employment relationship, fan relationship (including, *e.g.*, liking, etc.), follower relationship, visitor relationship (including, *e.g.*, accessing, viewing, checking-in, sharing, etc.), subscriber relationship, superior/subordinate relationship, reciprocal relationship, non-reciprocal relationship, another suitable type of relationship, or two or more such relationships. Moreover, although this disclosure generally describes nodes as being connected, this disclosure also describes users or concepts as being connected. Herein, references to users or concepts being connected may, where appropriate, refer to the nodes corresponding to those users or concepts being connected in social graph 200 by one or more edges 206.

In particular embodiments, an edge 206 between a user node 202 and a concept node 204 may represent a particular action or activity performed by a user associated with user node 202 toward a concept associated with a concept node 204. As an example and not by way of limitation, as illustrated in FIG. 2, a user may "like," "attended," "played," "listened," "cooked," "worked at," or "watched" a concept, each of which may correspond to an edge type or subtype. A concept-profile page corresponding to a concept node 204 may include, for example, a selectable "check in" icon (such as, for example, a clickable "check in" icon) or a selectable "add to favorites" icon. Similarly, after a user clicks these icons, social-networking system 160 may create a "favorite" edge or a "check in" edge in response to a user's action corresponding to a respective action. As another example and not by way of limitation, a user (user "C") may listen to a particular song ("Imagine") using a particular application (SPOTIFY, which is an online music application). In this case, social-networking system 160 may create a "listened" edge 206 and a "used" edge (as illustrated in FIG. 2) between user nodes 202 corresponding to the user and concept nodes 204 corresponding to the song and application to indicate that the user listened to the song and used the application. Moreover, social-networking system 160 may create a "played" edge 206 (as illustrated in FIG. 2) between concept nodes 204 corresponding to the song and the application to indicate that the particular song was played by the particular application. In this case, "played" edge 206 corresponds to an action performed by an external application (SPOTIFY) on an external audio file (the song "Imagine"). Although this disclosure describes particular edges 206 with particular attributes connecting user nodes 202 and concept nodes 204, this disclosure contemplates any suitable edges 206 with any suitable attributes connecting user nodes 202 and concept nodes 204. Moreover, although this disclosure describes edges between a user node 202 and a concept node 204 representing a single relationship, this disclosure contemplates edges between a user node 202 and a concept node 204 representing one or more relationships. As an example and not by way of limitation, an edge 206 may represent both that a user likes and has used at a particular concept. Alternatively, another edge 206 may represent each type of relationship (or multiples of a single relationship) between a user node 202 and a concept node 204 (as illustrated in FIG. 2 between user node 202 for user "E" and concept node 204 for "SPOTIFY").

In particular embodiments, social-networking system 160 may create an edge 206 between a user node 202 and a concept node 204 in social graph 200. As an example and not by way of limitation, a user viewing a concept-profile page (such as, for example, by using a web browser or a special-purpose application hosted by the user's client system 130) may indicate that he or she likes the concept represented by the concept node 204 by clicking or selecting a "Like" icon, which may cause the user's client system 130 to send to social-networking system 160 a message indicating the user's liking of the concept associated with the concept-profile page. In response to the message, social-networking system 160 may create an edge 206 between user node 202 associated with the user and concept node 204, as illustrated by "like" edge 206 between the user and concept node 204. In particular embodiments, social-networking system 160 may store an edge 206 in one or more data stores. In particular embodiments, an edge 206 may be automatically formed by social-networking system 160 in response to a particular user action. As an example and not by way of limitation, if a first user uploads a picture, watches a movie, or listens to a song, an edge 206 may be formed between user node 202 corresponding to the first user and concept nodes 204 corresponding to those concepts. Although this disclosure describes forming particular edges 206 in particular manners, this disclosure contemplates forming any suitable edges 206 in any suitable manner.

Training a Deep-Learning Model

Particular embodiments identify one or more content items that are similar to a given content item (*e.g.*, a search query) using a deep-learning model. Content items may include, as an example and not by way of limitation, text content (*e.g.*, one or more n-grams), visual content (*e.g.*, one or more images), audio content (*e.g.*, one or more audio recordings), video content (*e.g.*, one or more video clips), any other suitable type of content, or any combination thereof. As used herein, n-grams may be words or groups of words, any part of speech, punctuation marks (*e.g.*, "!"), colloquialisms (*e.g.*, "go nuts"), acronyms (*e.g.*, "BRB"), abbreviations (*e.g.*, "mgmt."), exclamations ("ugh"), alphanumeric characters, symbols, written characters, accent marks, or any combination thereof.

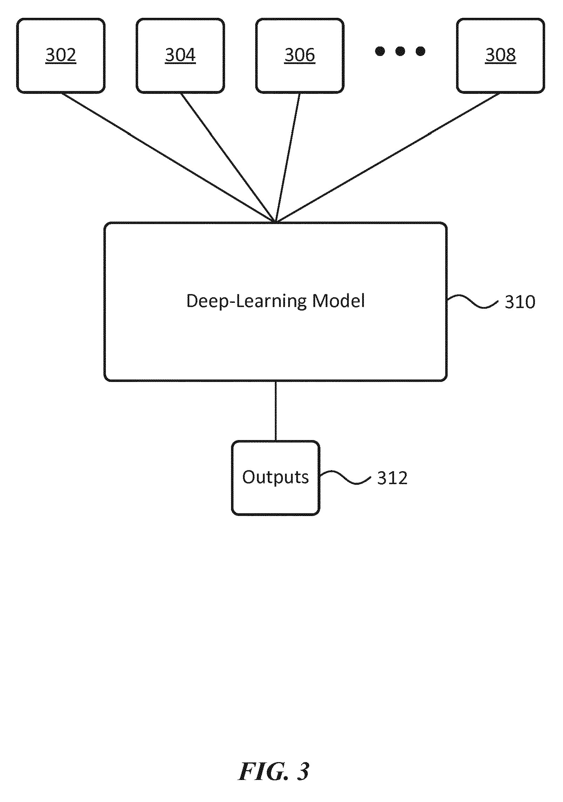

**FIG. 3** illustrates an example deep-learning model 310. Deep-learning model 310 may be a machine-learning model, a neural network, a latent neural network, any other suitable deep-learning model, or any combination thereof. In particular embodiments, deep-learning model 310 may have a plurality of layers of abstraction. Inputs 302, 304, 306, and 308 may be any suitable number of content items. Outputs 312 may be one or more embeddings of content items. The embedding space may be a multi-dimensional space (*e.g.*, *d*-dimensional, where d is a hyper-parameter that controls capacity) and may include a plurality of points corresponding to embeddings of content items. As used herein, an embedding of a content item refers to a representation of a content item in the embedding space. Although a particular number of input content items 302, 304, 306, and 308 are illustrated in FIG. 3, deep-learning model 310 may generate embeddings of content items for any suitable number of input content items 302, 304, 306, and 308.

In particular embodiments, deep-learning model 310 (*e.g.*, a neural network) may include one or more indices that map content items to vectors in $\mathbb{R}^d$, where $\mathbb{R}$ denotes the set of real numbers, and *d* is a hyper-parameter that controls capacity. The vectors may be *d*-dimensional intensity vectors. As used herein, intensity values may be any suitable values in the range of -1 to 1. Each of the vector representations of content items may provide coordinates for respective points in the embedding space. Although a particular number of input content items 302, 304, 306, and 308 are illustrated in FIG. 3, deep-learning model 310 may provide mappings between any suitable number of content items 302, 304, 306, and 308 and vector representations.

Deep-learning model 310 may be trained to generate optimal embeddings of content items. Deep-learning model 310 may include one or more indices, which may be dynamically updated as the deep-learning model 310 is trained. The one or more indices may be generated during a training phase of deep-learning model 310. Deep-learning model 310 may be, for example, a neural network or a latent neural network. Deep-learning model 310 may be initialized using a random distribution. That is, deep-learning model 310 may initially have randomly-assigned mappings (*i.e.*, between content items 302, 304, 306, and 308 and vector representations, based on which embeddings of content items 302, 304, 306, and 308 may be generated). As an example and not by way of limitation, the random distribution may be a Gaussian distribution. The training may result in the one or more indices of deep-learning model 310 generating more optimal mappings than the initial mappings.

Although this disclosure describes and illustrates particular embodiments of FIG. 3 as being implemented by social-networking system 160, this disclosure contemplates any suitable embodiments of FIG. 3 as being implemented by any suitable platform or system. As an example, and not by way of limitation, particular embodiments of FIG. 3 may be implemented by client system 130, third-party system 170, or any other suitable system. Furthermore, although this disclosure describes and illustrates particular components, devices, or systems carrying out particular steps of the method of FIG. 3, this disclosure contemplates any suitable combination of any suitable components, devices, or systems carrying out any suitable steps of the method of FIG. 3.

In particular embodiments, deep-learning model 310 may be trained to generate clusters of embeddings of content items in an embedding space. Each cluster may be associated with a class of content items (*e.g.*, a categorization or subset of content items). As used herein, a cluster may be a set of one or more points corresponding to embeddings of content items in an embedding space, and the content items whose embeddings are in the cluster may belong to the same class.

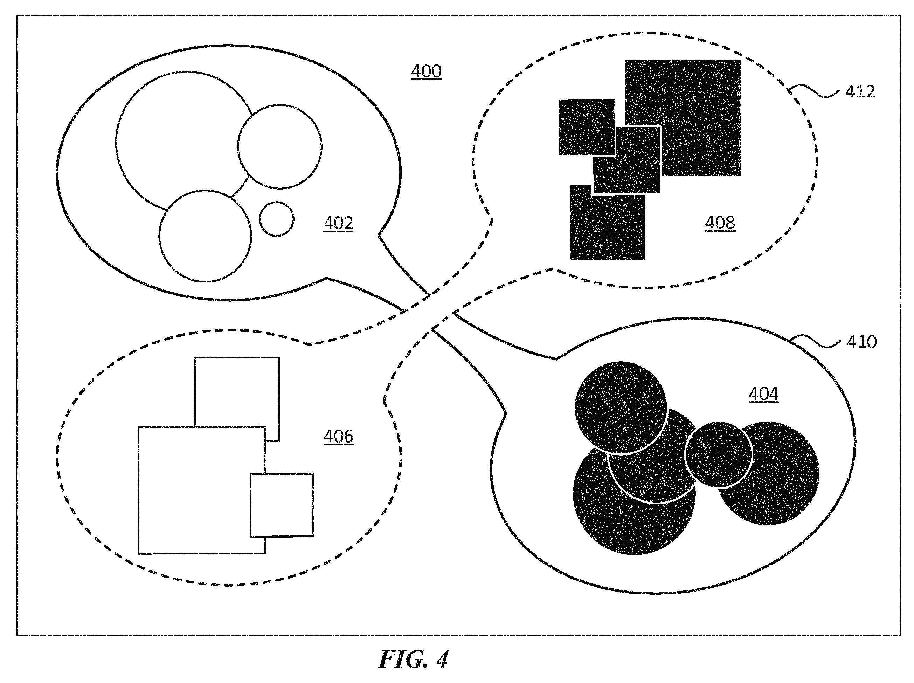

**FIG. 4** illustrates an example view 400 of an embedding space generated using a deep-learning model 310. The embedding space is depicted as including two clusters 410 and 412. Cluster 410 is shown as including embeddings of content items depicted as sets of circles—a set of white circles 402 and a set of black circles 404. Cluster 412 is shown as including embeddings of content items depicted as sets of squares—a set of white squares 406 and a set of black squares 408. Although embeddings of content items 402, 404, 406, and 408 are depicted in FIG. 4 as being particular shapes, it will be understood that each of these embeddings represents a respective point (*i.e.*, defined by coordinates) in the multi-dimensional embedding space. Embeddings of content items 402, 404, 406, and 408 are depicted as having particular shapes for clarity and ease of description.

In particular embodiments, deep-learning model 310 may be trained to embed content items in clusters in the embedding space (*e.g.*, to classify content items) and to embed content items at locations within the clusters based on interclass variation. As used herein, embedding a content item may refer to generating an embedding of a content item corresponding to a particular point in the embedding space. Before deep-learning model 310 is trained (*e.g.*, at initialization), deep-learning model 310 may generate embeddings of content items that are randomly interspersed in the embedding space. Deep-learning model 310 may be trained to minimize or reduce error between the vector representation of each embedding of a content item and the vector representations of embeddings of content items that are similar. Deep-learning model 310 may be trained to determine similarity between content items using semantic similarity (*e.g.*,

a relationship based on one or more meanings of the content items) and visual similarity (*e.g.*, a relationship based on one or more visual attributes of visual content items). In particular embodiments, deep-learning model 310 may be trained to classify content items (*e.g.*, to embed in a particular cluster) based on semantic similarity of the content items. In particular embodiments, deep-learning model 310 may be trained to embed content items at particular locations within a cluster based on visual similarity between content items embedded in the same cluster and in different clusters (*e.g.*, proximate or neighboring clusters). Deep-learning model 310 may be trained using a loss function that reduces overlap between points located in one or more clusters in the embedding space (*e.g.*, by adding an additional measure of similarity). Although similarity is described and illustrated herein as being made up of semantic and visual similarities, it will be understood that this is merely illustrative and not by way of limitation. Similarity may be defined based on semantic similarity, visual similarity, audio similarity, any other suitable measure of similarity, or any combination thereof. Similarity may be defined based on the type of content item. As an example and not by way of limitation, deep-learning model 310 may generate embeddings for audio content items, and deep-learning model 310 may be trained to embed the audio content items based on semantic similarity and audio similarity (*e.g.*, one or more attributes of the audio content).

Deep-learning model 310 may be trained to classify content items (*e.g.*, to embed in a cluster) in an unsupervised setting (*e.g.*, trained to provide structure for unlabeled data). In particular embodiments, deep-learning model 310 may be further trained (*e.g.*, using a different layer of deep-learning model 310 than that used to classify the content items) to embed content items at locations in clusters that reflect visual similarity between content items in the same and different clusters in the embedding space. Visual similarity may be determined based on one or more attributes of content items. As an example and not by way of limitation, visual similarity may be based on pose, lighting conditions, scene geometry, color, material, texture, size, granularity (*e.g.*, fine grain or coarse grain), any other suitable visual attribute of a content item, or any combination thereof. Attributes of content items may be latent input variables of deep-learning model 310.

Similarity may be represented in the embedding space by distance. At a high level, similar content items may be embedded at points that are proximate to each other in the embedding space. Semantic similarity may be represented by global proximity (*e.g.*, content items in the same class may be embedded at points in the same cluster in the embedding space). Visual similarity may be represented by local proximity (*e.g.*, content items having one or more attributes in common may be embedded at points proximate to each other notwithstanding cluster assignments).

In the illustrated example of FIG. 4, white circles 402 may represent embeddings of images of white dogs; black circles 404 may represent embeddings of images of black dogs; white squares 406 may represent embeddings of images of white cats; and black squares 408 may represent embeddings of images of black cats. Deep-learning model 310 may be trained to discriminate globally between classes of animals (*e.g.*, dogs and cats) and further trained to discriminate locally between black and white cats and dogs (*i.e.*, an attribute of the cats and dogs that is represented in the embedding space is color). Deep-learning model 310 may generate embeddings 402 of images of white dogs and embeddings 404 of images of black dogs that are located in cluster 410, which may be associated with a class of dogs. Deep-learning model may also generate embeddings 406 of images of white cats and embeddings 408 of images of black cats that are located in cluster 412, which may be associated with a class of cats. As shown in FIG. 4, embeddings 402 of images of white dogs are close in distance to embeddings 406 of images of white cats, although embeddings 402 and 406 are in different clusters. Also as shown in FIG. 4, embeddings 404 of images of black dogs are close in distance to embeddings 408 of images of black cats, although embeddings 404 and 408 are in different clusters. The embedding space may provide a representation of similarity in classes as well as in visual similarity based on one or more attributes (*e.g.*, color).

In particular embodiments, deep-learning model 310 may be trained using an algorithm based on clustering techniques. Deep-learning model 310 may be trained in an unsupervised manner to assign content items to clusters for each class (*i.e.*, to embed each content item in a respective class). Deep-learning model 310 may be further trained using an algorithm that searches for overlap between clusters of points in the embedding space and reduces or minimizes the overlap between these clusters at a local level. In particular embodiments, the training set for deep-learning model 310 may be given by eqs. (1)-(4):

Input Content Item Pairs (*D*)

$$D = \{x_n, y_n\}_{n=1}^{N} \text{ in } C \text{ classes} \qquad (1)$$

Vector Representations (*$r_n$*) of Content Items

$$r_n = f(x_n; \Theta), n = 1, \dots, N \qquad (2)$$

For each class *C*, there are $K_c$ cluster assignments

$$I_1^c, \ldots, I_{K_c}^c = \arg min_{I_1^{c\prime}, \ldots, I_{K_c}^{c\prime}} \sum_{k=1}^{K_c} \sum_{r \in I_{k_c}^{c\prime}} \| r$$

$$- \mu_k \|_2^2 , \tag{3}$$

where

$$\mu_k = \frac{1}{|I_k^{c\prime}|} \sum_{r \in I_k^{c\prime}} r \tag{4}$$

As used herein, $\Theta$ denotes a parameter vector, $x_n$ denotes a content item, $y_n$ denotes a content item, and n E [1,$N$]. In particular embodiments, deep-learning model 310 may be trained using a loss function ($L(\Theta)$) given by eq. (5):

$$\mathcal{L}(\Theta) = \frac{1}{N} \sum_{n=1}^{N} \left\{ -\log \frac{e^{-\frac{1}{2\sigma^2} \| r_n - \mu_{I(r_n)} \|_2^2 - \alpha}}{\sum_{c \neq C(r_n)} \sum_{k=1}^{K} e^{-\frac{1}{2\sigma^2} \| r_n - \mu_k^c \|_2^2}} \right\} \tag{5}$$

where the variance ($\sigma^2$) is given by:

$$\sigma^2 = \frac{1}{N-1} \sum_{r \in D} \| r - \mu_{I(r)} \|_2^2 \tag{6}$$

As used herein, $\mu$ denotes a learning rate, $\alpha$ denotes a variable margin between clusters. The $\alpha$ parameter may be adjusted depending on a desired tightness of the clusters of the embedding space (*e.g.*, how close in space the clusters of points are to each other in the embedding space).

In particular embodiments, training deep-learning model 310 (*e.g.*, using the loss function shown as eq. (5)) may result in one or more weights of deep-learning model 310 being updated. Initial values of the one or more weights of the deep-learning model may be randomly determined (*e.g.*, using a Gaussian distribution). In particular embodiments, one or more of the weights of the deep-learning model may be updated to minimize overlap between clusters of points in the embedding space. In particular embodiments, one or more weights of the deep-learning model may be updated to minimize error using the loss function given by eq. (5). The weights of the deep-learning model may be updated to yield better embeddings for content items, which may result in a distribution of points (*i.e.*, corresponding to embeddings of content items) in the embedding space with less overlap between clusters.

Although this disclosure describes and illustrates particular embodiments of FIG. 4 as being implemented in a particular way, this disclosure contemplates any suitable embodiments of FIG. 4 occurring on any suitable interface and as being implemented by any suitable platform or system. As an example, and not by way of limitation, particular embodiments of FIG. 4 may be implemented by client system 130, social-networking system 160, third-party system 170, or any other suitable system. Furthermore, although this disclosure describes and illustrates particular components, devices, or systems carrying out particular steps of the method of FIG. 4, this disclosure contemplates any suitable combination of any suitable components, devices, or systems carrying out any suitable steps of the method of FIG. 4.

Once the deep-learning model has been trained to embed content items in an embedding space, the embedding space may be used to accomplish a variety of tasks, including, as an example and not by way of limitation, identifying particular content items given an input content item.

Using an Embedding Space to Identify Similar Content Items

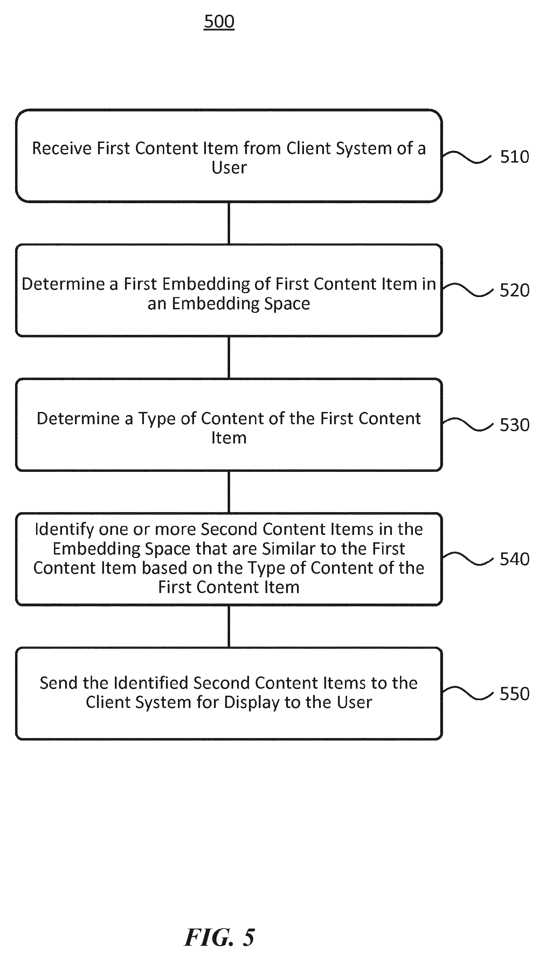

**FIG. 5** illustrates an example method 500 for identifying similar content items in an embedding space. At step 510, a system may receive a first content item from client system 130 of a user. As an example and not by way of limitation, the first content item may be a search query inputted by the user at an interface of client system 130. At step 520, deep-learning model 310 may be used to determine a first embedding of the first content item in an embedding space. In particular embodiments, before determining a first embedding of the first content item, deep-learning model 310 may be trained as described in connection with FIG. 4. Deep-learning model may, as an example and not by way of limitation, map the first content item to a first vector representation of the first content item. A first embedding of the first content item may be determined based on the first vector representation of the first content item, and the first embedding may correspond to a first point in an embedding space. In particular embodiments, the embedding space may include a plurality of second points corresponding to a plurality of second embeddings of second content items. The second embeddings may be determined using deep-learning model 310. The first and second points may be located in one or more clusters in the embedding space. The first and second points may be further located within the clusters based on one or more attributes of the first and second content items. The one or more attributes of the first and second content items may be latent variables, based on which deep-learning model 310 may be trained.

At step 530, the system may determine a type of content of the first content item. A type of content of the first content item may be text content, image content, audio content, video content, medical-imagery content, any other suitable type of content, or any combination thereof. As an example and not by way of limitation, the first content item may be visual content (*e.g.*, an image of a baby sleeping with French Bulldogs). As another example and not by way of limitation, the first content item may be text content (*e.g.*, "Kacey Musgraves").

At step 540, the system may identify one or more second content items in the embedding space that are similar to the first content item. In particular embodiments, the system may identify one or more second content items based on the location of a first point corresponding to the first embedding of the first content item, on the one or more particular clusters that the one or more second points corresponding to the one or more second content items are located in, and on the locations of the one or more second points corresponding to the one or more second content items within the particular clusters. As an example and not by way of limitation, the first point corresponding to the embedding of the first content item may be located in a particular cluster, and a search algorithm may be applied to identify one or more second points that are within a threshold distance of the first point in the particular cluster. As another example and not by way of limitation, the first point may be located proximate to one or more clusters in the embedding space, and a search algorithm may be applied to identify one or more second points that are within a threshold distance of the first point in each of the proximate cluster (*i.e.*, to retrieve diversified search results). As another example and not by way of limitation, the first point may be located proximate to one or more clusters in the embedding space, and search algorithms may be applied in each of the proximate clusters to identify one or more points in each of the proximate clusters that are within a threshold distance of a centroid of the respective proximate cluster.

In particular embodiments, the system may identify one or more second content items in the embedding space that are similar to the first content item based on the type of content of the first content item, which is identified at step 530. The particular search algorithms applied to identify second content items similar to the first content item may vary depending on the type of content of the first content item. As an example and not by way of limitation, if the first content item is text content (*e.g.*, "Kacey Musgraves"), a search algorithm may be applied to search for second points within the cluster (*e.g.*, class of country musicians) in which the first point corresponding to the first embedding of the first content item is located. As another example and not by way of limitation, if the first content item is visual content (*e.g.*, an image of a baby sleeping with French Bulldogs), a search algorithm may be applied to search for second points within a threshold distance of the first point, regardless of the cluster in which each second point is located.

At step 550, the system may send the second content items identified in step 540 to client system 130 for display to the user. As an example and not by way of limitation, first content item may be inputted as a search query by the user at an interface of client system 130, and the identified second content items may be displayed to the user as search results at client system 130.

Particular embodiments may repeat one or more steps of the method of FIG. 5, where appropriate. Although this disclosure describes and illustrates particular steps of the method of FIG. 5 as occurring in a particular order, this disclosure contemplates any suitable steps of the method of FIG. 5 occurring in any suitable order. Although this disclosure describes and illustrates particular embodiments of FIG. 5 as being implemented in a particular way, this disclosure contemplates any suitable embodiments of FIG. 5 occurring on any suitable interface and as being implemented by any suitable platform or system. As an example, and not by way of limitation, particular embodiments of FIG. 5 may be implemented by client system 130, social-networking system 160, third-party system 170, or any other suitable system. Furthermore, although this disclosure describes and illustrates particular components, devices, or systems carrying out particular steps of the method of FIG. 5, this disclosure contemplates any suitable combination of any suitable components, devices, or systems carrying out any suitable steps of the method of FIG. 5.

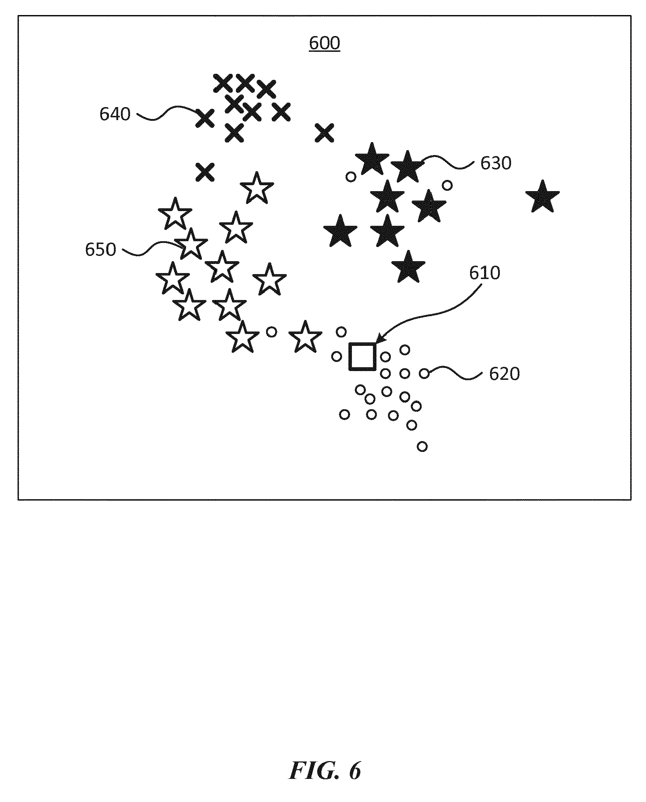

FIG. 6 illustrates an example view 600 of an embedding space. The embedding space may include clusters 620, 630, 640, and 650 of second points corresponding to second embeddings of second content items. Each of clusters 620, 630, 640, and 650 may be associated with a class of content items. The embedding space may also include first point 610 corresponding to a first embedding of a first content item. The embedding space may be generated using deep-learning model 310. As depicted in FIG. 6, the embedding space may be at least partially trained (*e.g.*, using the loss function of eq. (5)). The distance between each of clusters 620, 630, 640, and 650 may be dependent on the $\alpha$ parameter from eq. (5), as described above in connection with FIG. 4. It will be understood that although the embedding space in FIG. 6 is depicted as being 2-dimensional, the embedding space may be of any suitable dimensionality (*e.g.*, multi-dimensional).

A first content item may be received, and it may be embedded in the embedding space by determining a first point 610 corresponding to a first embedding of the first content item using deep-learning model 310. In the illustrated example of FIG. 6, first point 610 is located within cluster 620 of second points. As described above in connection with FIG. 5, a search algorithm may be applied to identify one or more similar second content items to the first content item. As an example and not by way of limitation, a search algorithm may be applied to determine that one or more second points in cluster 620 are within a threshold distance of first point 610 in cluster 620, and the second content items corresponding to the one or more second points may be identified as similar to the first content item. As an example and not by way of limitation, a search algorithm may be applied to determine that one or more second points in clusters 620, 630, and 650 are within a threshold distance of first point 310, and the second content items corresponding to the one or more second points in clusters 620, 630, and 650 may be identified as similar to the first content item.

Although this disclosure describes and illustrates particular embodiments of FIG. 6 as being implemented in a particular way, this disclosure contemplates any suitable embodiments of FIG. 6 occurring on any suitable interface and as being implemented by any suitable platform or system. As an example, and not by way of limitation, particular embodiments of FIG. 6 may be implemented by client system 130, social-networking system 160, third-party system 170, or any other suitable system. Furthermore, although this disclosure describes and illustrates particular components, devices, or systems carrying out particular steps of the method of FIG. 6, this disclosure contemplates any suitable combination of any suitable components, devices, or systems carrying out any suitable steps of the method of FIG. 6.

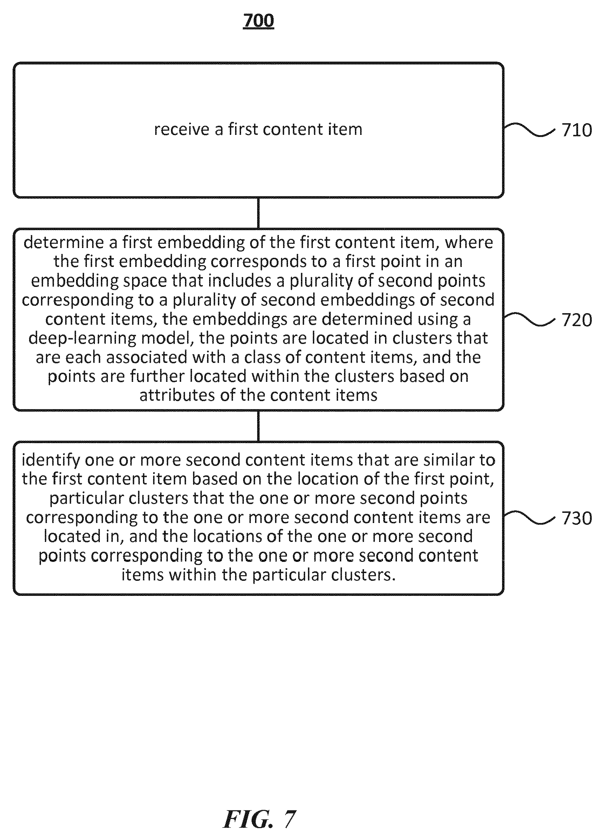

FIG. 7 illustrates an example method for identifying second content items that are similar to a first content item. The method may begin at step 710, a first content item is received. At step 720, a first embedding of the first content item is determined, where the first embedding corresponds to a first point in an embedding space, the embedding space comprises a plurality of second points corresponding to a plurality of second embeddings of second content items, the first and second embeddings are determined using a deep-learning model, the first and second points are located in one or more clusters in the embedding space, each of the clusters is associated with a class of content items, and the first and second points are further located within the clusters based on one or more attributes of the first and second content items. At step 730, one or more of the second content items that are similar to the first content item are identified based on the location of the first point, one or more particular clusters that the one or more second points corresponding to the one or more second content items are located in, and the locations of the one or more second points corresponding to the one or more second content items within the particular clusters.

Particular embodiments may repeat one or more steps of the method of FIG. 7, where appropriate. Although this disclosure describes and illustrates particular steps of the method of FIG. 7 as occurring in a particular order, this disclosure contemplates any suitable steps of the method of FIG. 7 occurring in any suitable order. Moreover, although this disclosure describes and illustrates an example method identifying second content items that are similar to a first content item including the particular steps of the method of FIG. 7, this disclosure contemplates any suitable method for identifying second content items that are similar to a first content item including any suitable steps, which may include all, some, or none of the steps of the method of FIG. 7, where appropriate. Furthermore, although this disclosure describes and illustrates particular components, devices, or systems carrying out particular steps of the method of FIG. 7, this disclosure contemplates any suitable combination of any suitable components, devices, or systems carrying out any suitable steps of the method of FIG. 7.

Systems and Methods

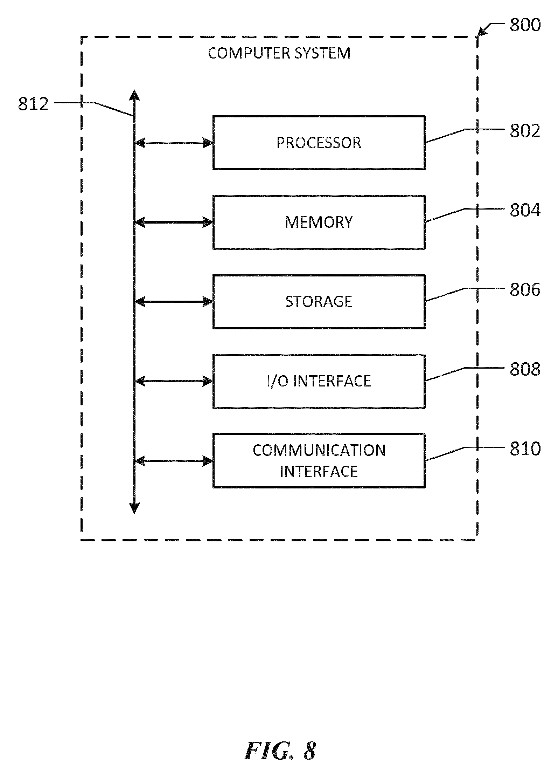

FIG. 8 illustrates an example computer system 800. In particular embodiments, one or more computer systems 800 perform one or more steps of one or more methods described or illustrated herein. In particular embodiments, one or more computer systems 800 provide functionality described or illustrated herein. In particular embodiments, software running on one or more computer systems 800 performs one or more steps of one or more methods described or illustrated herein or provides functionality described or illustrated herein. Particular embodiments include one or more portions of one or more computer systems 900. Herein, reference to a computer system may encompass a computing device, and vice versa, where appropriate. Moreover, reference to a computer system may encompass one or more computer systems, where appropriate.

This disclosure contemplates any suitable number of computer systems 900. This disclosure contemplates computer system 800 taking any suitable physical form. As example and not by way of limitation, computer system 800 may be an embedded computer system, a system-on-chip (SOC), a single-board computer system (SBC) (such as, for example, a computer-on-module (COM) or system-on-module (SOM)), a desktop computer system, a laptop or notebook computer system, an interactive kiosk, a mainframe, a mesh of computer systems, a mobile telephone, a personal digital assistant (PDA), a server, a tablet computer system, or a combination of two or more of these. Where appropriate, computer system 800 may include one or more computer systems 800; be unitary or distributed; span multiple locations; span multiple machines; span multiple data centers; or reside in a cloud, which may include one or more cloud components in one or more networks. Where appropriate, one or more computer systems 800 may perform without substantial spatial or temporal limitation one or more steps of one or more methods described or illustrated herein. As an example and not by way of limitation, one or more computer systems 800 may perform in real time or in batch mode one or more steps of one or more methods described or illustrated herein. One or more computer systems 800 may perform at different times or at different locations one or more steps of one or more methods described or illustrated herein, where appropriate.

In particular embodiments, computer system 800 includes a processor 802, memory 804, storage 806, an input/output (I/O) interface 808, a communication interface 810, and a bus 812. Although this disclosure describes and illustrates a particular computer system having a particular number of particular components in a particular arrangement, this disclosure contemplates any suitable computer system having any suitable number of any suitable components in any suitable arrangement.

In particular embodiments, processor 802 includes hardware for executing instructions, such as those making up a computer program. As an example and not by way of limitation, to execute instructions, processor 802 may retrieve (or fetch) the instructions from an internal register, an internal cache, memory 804, or storage 806; decode and execute them; and then write one or more results to an internal register, an internal cache, memory 804, or storage 806. In particular embodiments, processor 802 may include one or more internal caches for data, instructions, or addresses. This disclosure contemplates processor 802 including any suitable number of any suitable internal caches, where appropriate. As an example and not by way of limitation, processor 802 may include one or more instruction caches, one or more data caches, and one or more translation lookaside buffers (TLBs). Instructions in the instruction caches may be copies of instructions in memory 804 or storage 806, and the instruction caches may speed up retrieval of those instructions by processor 802. Data in the data caches may be copies of data in memory 804 or storage 806 for instructions executing at processor 802 to operate on; the results of previous instructions executed at processor 802 for access by subsequent instructions executing at processor 802 or for writing to memory 804 or storage 806; or other suitable data. The data caches may speed up read or write operations by processor 802. The TLBs may speed up virtual-address translation for processor 802. In particular embodiments, processor 802 may include one or more internal registers for data, instructions, or addresses. This disclosure contemplates processor 802 including any suitable number of any suitable internal registers, where appropriate. Where appropriate, processor 802 may include one or more arithmetic logic units (ALUs); be a multi-core processor; or include one or more processors 802. Although this disclosure describes and illustrates a particular processor, this disclosure contemplates any suitable processor.

In particular embodiments, memory 804 includes main memory for storing instructions for processor 802 to execute or data for processor 802 to operate on. As an example and not by way of limitation, computer system 800 may load instructions from storage 806 or another source (such as, for example, another computer system 800) to memory 804. Processor 802 may then load the instructions from memory 804 to an internal register or internal cache. To execute the instructions, processor 802 may retrieve the instructions from the internal register or internal cache and decode them. During or after execution of the instructions, processor 802 may write one or more results (which may be intermediate or final results) to the internal register or internal cache. Processor 802 may then write one or more of those results to memory 804. In particular embodiments, processor 802 executes only instructions in one or more internal registers or internal caches or in memory 804 (as opposed to storage 806 or elsewhere) and operates only on data in one or more internal registers or internal caches or in memory 804 (as opposed to storage 806 or elsewhere). One or more memory buses (which may each include an address bus and a data bus) may couple processor 802 to memory 804. Bus 812 may include one or more memory buses, as described below. In particular embodiments, one or more memory management units (MMUs) reside between processor 802 and memory 804 and facilitate accesses to memory 804 requested by processor 802. In particular embodiments, memory 804 includes random access memory (RAM). This RAM may be volatile memory, where appropriate Where appropriate, this RAM may be dynamic RAM (DRAM) or static RAM (SRAM). Moreover, where appropriate, this RAM may be single-ported or multi-ported RAM. This disclosure contemplates any suitable RAM. Memory 804 may include one or more memories 804, where appropriate. Although this disclosure describes and illustrates particular memory, this disclosure contemplates any suitable memory.

In particular embodiments, storage 806 includes mass storage for data or instructions. As an example and not by way of limitation, storage 806 may include a hard disk drive (HDD), a floppy disk drive, flash memory, an optical disc, a magneto-optical disc, magnetic tape, or a Universal Serial Bus (USB) drive or a combination of two or more of these. Storage 806 may include removable or non-removable (or fixed) media, where appropriate. Storage 806 may be internal or external to computer system 800, where appropriate. In particular embodiments, storage 806 is non-volatile, solid-state memory. In particular embodiments, storage 806 includes read-only memory (ROM). Where appropriate, this ROM may be mask-programmed ROM, programmable ROM (PROM), erasable PROM (EPROM), electrically erasable PROM (EEPROM), electrically alterable ROM (EAROM), or flash memory or a combination of two or more of these. This disclosure contemplates mass storage 806 taking any suitable physical form. Storage 806 may include one or more storage control units facilitating communication between processor 802 and storage 806, where appropriate. Where appropriate, storage 806 may include one or more storages 806. Although this disclosure describes and illustrates particular storage, this disclosure contemplates any suitable storage.

In particular embodiments, I/O interface 808 includes hardware, software, or both, providing one or more interfaces for communication between computer system 800 and one or more I/O devices. Computer system 800 may include one or more of these I/O devices, where appropriate. One or more of these I/O devices may enable communication between a person and computer system 800. As an example and not by way of limitation, an I/O device may include a keyboard, keypad, microphone, monitor, mouse, printer, scanner, speaker, still camera, stylus, tablet, touch screen, trackball, video camera, another suitable I/O device or a combination of two or more of these. An I/O device may include one or more sensors. This disclosure contemplates any suitable I/O devices and any suitable I/O interfaces 808 for them. Where appropriate, I/O interface 808 may include one or more device or software drivers enabling processor 802 to drive one or more of these I/O devices. I/O interface 808 may include one or more I/O interfaces 808, where appropriate. Although this disclosure describes and illustrates a particular I/O interface, this disclosure contemplates any suitable I/O interface.

In particular embodiments, communication interface 810 includes hardware, software, or both providing one or more interfaces for communication (such as, for example, packet-based communication) between computer system 800 and one or more other computer systems 800 or one or more networks. As an example and not by way of limitation, communication interface 810 may include a network interface controller (NIC) or network adapter for communicating with an Ethernet or other wire-based network or a wireless NIC (WNIC) or wireless adapter for communicating with a wireless network, such as a WI-FI network. This disclosure contemplates any suitable network and any suitable communication interface 810 for it. As an example and not by way of limitation, computer system 800 may communicate with an ad hoc network, a personal area network (PAN), a local area network (LAN), a wide area network (WAN), a metropolitan area network (MAN), or one or more portions of the Internet or a combination of two or more of these. One or more portions of one or more of these networks may be wired or wireless. As an example, computer system 800 may communicate with a wireless PAN (WPAN) (such as, for example, a BLUETOOTH WPAN), a WI-FI network, a WI-MAX network, a cellular telephone network (such as, for example, a Global System for Mobile Communications (GSM) network), or other suitable wireless network or a combination of two or more of these. Computer system 800 may include any suitable communication interface 810 for any of these networks, where appropriate. Communication interface 810 may include one or more communication interfaces 810, where appropriate. Although this disclosure describes and illustrates a particular communication interface, this disclosure contemplates any suitable communication interface.

In particular embodiments, bus 812 includes hardware, software, or both coupling components of computer system 800 to each other. As an example and not by way of limitation, bus 812 may include an Accelerated Graphics Port (AGP) or other graphics bus, an Enhanced Industry Standard Architecture (EISA) bus, a front-side bus (FSB), a HYPERTRANSPORT (HT) interconnect, an Industry Standard Architecture (ISA) bus, an INFINIBAND interconnect, a low-pin-count (LPC) bus, a memory bus, a Micro Channel Architecture (MCA) bus, a Peripheral Component Interconnect (PCI) bus, a PCI-Express (PCIe) bus, a serial advanced technology attachment (SATA) bus, a Video Electronics Standards Association local (VLB) bus, or another suitable bus or a combination of two or more of these. Bus 812 may include one or more buses 812, where appropriate. Although this disclosure describes and illustrates a particular bus, this disclosure contemplates any suitable bus or interconnect.

Herein, a computer-readable non-transitory storage medium or media may include one or more semiconductor-based or other integrated circuits (ICs) (such, as for example, field-programmable gate arrays (FPGAs) or application-specific ICs (ASICs)), hard disk drives (HDDs), hybrid hard drives (HHDs), optical discs, optical disc drives (ODDs), magneto-optical discs, magneto-optical drives, floppy diskettes, floppy disk drives (FDDs), magnetic tapes, solid-state drives (SSDs), RAM-drives, SECURE DIGITAL cards or drives, any other suitable computer-readable non-transitory storage media, or any suitable combination of two or more of these, where appropriate. A computer-readable non-transitory storage medium may be volatile, non-volatile, or a combination of volatile and non-volatile, where appropriate.

Miscellaneous

Herein, "or" is inclusive and not exclusive, unless expressly indicated otherwise or indicated otherwise by context. Therefore, herein, "A or B" means "A, B, or both," unless expressly indicated otherwise or indicated otherwise by context. Moreover, "and" is both joint and several, unless expressly indicated otherwise or indicated otherwise by context. Therefore, herein, "A and B" means "A and B, jointly or severally," unless expressly indicated otherwise or indicated otherwise by context.

The scope of this disclosure encompasses all changes, substitutions, variations, alterations, and modifications to the example embodiments described or illustrated herein that a person having ordinary skill in the art would comprehend. The scope of this disclosure is not limited to the example embodiments described or illustrated herein. Moreover, although this disclosure describes and illustrates respective embodiments herein as including particular components, elements, feature, functions, operations, or steps, any of these embodiments may include any combination or permutation of any of the components, elements, features, functions, operations, or steps described or illustrated anywhere herein that a person having ordinary skill in the art would comprehend. Furthermore, reference in the appended claims to an apparatus or system or a component of an apparatus or system being adapted to, arranged to, capable of, configured to, enabled to, operable to, or operative to perform a particular function encompasses that apparatus, system, component, whether or not it or that particular function is activated, turned on, or unlocked, as long as that apparatus, system, or component is so adapted, arranged, capable, configured, enabled, operable, or operative.

**Claims**

1. A computer-implemented method comprising:

    receiving, by one or more computing devices, a first content item;
    determining, by one or more computing devices, a first embedding of the first content item, wherein:

        the first embedding corresponds to a first point in an embedding space, the embedding space comprises a plurality of second points corresponding to a plurality of second embeddings of second content items,
        the first and second embeddings are determined using a deep-learning model,
        the first and second points are located in one or more clusters in the embedding space,
        each of the clusters is associated with a class of content items, and
        the first and second points are further located within the clusters based on one or more attributes of the first and second content items; and identifying, by one or more computing devices, one or more of the second content items that are similar to the first content item based on:

            the location of the first point,
            one or more particular clusters that the one or more second points corresponding to the one or more second content items are located in, and
            the locations of the one or more second points corresponding to the one or more second content items within the particular clusters.

2. The method of Claim 1, wherein the deep-learning model is trained using a loss function that reduces overlap between points located in the one or more clusters.

3. The method of Claim 1 or 2, wherein the one or more attributes of the first and second content items are latent input variables of the deep-learning model, and/or
wherein the deep-learning model is a neural network.

4. The method of any of Claims 1 to 3, the method comprising the further step of: generating, based on the identified one or more second content items, a search result and providing the search result for display on a display device associated with a querying user; and/or the further step of storing the first content item in accordance with a cluster associated with the identified one or more second content items and/or comprising the step of caching or pre-caching one or more of the identified second content items on a client device associated with a user and/or on a server, and/or further comprising the step of re-clustering content items, in particular selected from the identified one or more second content items, based on the identified similar second content items.

5. The method of any of Claims 1 to 4, wherein the first content item and the second content items are each visual content, and wherein the one or more attributes of the first and second content items comprise one or more of color, pose, lighting conditions, scene geometry, material, texture, size, and granularity.

6. The method of any of Claims 1 to 5, wherein the first content item is a search query received at a client system of a user; preferably further comprising sending, to the client system, the one or more identified second content items for display to the user.

7. The method of any of Claims 1 to 6, wherein a type of content of the first content item comprises one or more of text content, image content, audio content, and video content;
preferably further comprising determining the type of content of the first content item, and wherein identifying one or more of the second content items is further based on the type of content of the first content item.

8. One or more computer-readable non-transitory storage media embodying software that is operable when executed to:

receive a first content item;
determine a first embedding of the first content item, wherein:

the first embedding corresponds to a first point in an embedding space,
the embedding space comprises a plurality of second points corresponding to a plurality of second embeddings of second content items,
the first and second embeddings are determined using a deep-learning model,
the first and second points are located in one or more clusters in the embedding space,
each of the clusters is associated with a class of content items, and
the first and second points are further located within the clusters based on one or more attributes of the first and second content items; and

identify one or more of the second content items that are similar to the first content item based on:

the location of the first point,
one or more particular clusters that the one or more second points corresponding to the one or more second content items are located in, and
the locations of the one or more second points corresponding to the one or more second content items within the particular clusters.

9. The media of Claim 8, wherein the deep-learning model is trained using a loss function that reduces overlap between points located in the one or more clusters.

10. The media of Claim 8 or 9, wherein the one or more attributes of the first and second content items are latent input variables of the deep-learning model.

11. The media of any of Claims 8 to 10, wherein the first content item and the second content items are each visual content, and wherein the one or more attributes of the first and second content items comprise one or more of color, pose, lighting conditions, scene geometry, material, texture, size, and granularity; and/or wherein the first content item is a search query received at a client system of a user.

12. A system comprising: one or more processors; and a memory coupled to the processors comprising instructions executable by the processors, the processors operable when executing the instructions to:

receive a first content item;
determine a first embedding of the first content item, wherein:

the first embedding corresponds to a first point in an embedding space,
the embedding space comprises a plurality of second points corresponding to a plurality of second embeddings of second content items,
the first and second embeddings are determined using a deep-learning model,
the first and second points are located in one or more clusters in the embedding space,
each of the clusters is associated with a class of content items, and
the first and second points are further located within the clusters based on one or more attributes of the first and second content items; and

identify one or more of the second content items that are similar to the first content item based on:

the location of the first point,
one or more particular clusters that the one or more second points corresponding to the one or more second content items are located in, and the locations of the one or more second points corresponding to the one or more second content items within the particular clusters.

13. The system of Claim 12, wherein the deep-learning model is trained using a loss function that reduces overlap between points located in the one or more clusters.

**14.** The system of Claim 12 or 13, wherein the one or more attributes of the first and second content items are latent input variables of the deep-learning model.

**15.** The system of any of Claims 12 to 14, wherein the first content item and the second content items are each visual content, and wherein the one or more attributes of the first and second content items comprise one or more of color, pose, lighting conditions, scene geometry, material, texture, size, and granularity; and/or
wherein the first content item is a search query received at a client system of a user.

100

SOCIAL-NETWORKING SYSTEM

160

162
SERVER

164
DATA STORE

150

CLIENT SYSTEM

WEB BROWSER
132

130

NETWORK
110

150

THIRD-PARTY
SYSTEM

170

*FIG. 1*

*FIG. 2*

EP 3 166 025 A1

| 302 | 304 | 306 | • • • | 308 |

Deep-Learning Model    310

Outputs    312

**FIG. 3**

*FIG. 4*

500

```
┌─────────────────────────────────────────┐
│                                         │
│   Receive First Content Item from       │        510
│   Client System of a User               │
│                                         │
└─────────────────────────────────────────┘

┌─────────────────────────────────────────┐
│                                         │
│   Determine a First Embedding of        │        520
│   First Content Item in an              │
│   Embedding Space                       │
└─────────────────────────────────────────┘

┌─────────────────────────────────────────┐
│                                         │
│   Determine a Type of Content of the    │        530
│   First Content Item                    │
│                                         │
└─────────────────────────────────────────┘

┌─────────────────────────────────────────┐
│   Identify one or more Second Content   │
│   Items in the Embedding Space that     │
│   are Similar to the First Content      │        540
│   Item based on the Type of Content     │
│   of the First Content Item             │
└─────────────────────────────────────────┘

┌─────────────────────────────────────────┐
│                                         │
│   Send the Identified Second Content    │        550
│   Items to the Client System for        │
│   Display to the User                   │
└─────────────────────────────────────────┘
```

*FIG. 5*

FIG. 6

700

receive a first content item                                    710

determine a first embedding of the first content item, where the first embedding corresponds to a first point in an embedding space that includes a plurality of second points corresponding to a plurality of second embeddings of second content items, the embeddings are determined using a deep-learning model, the points are located in clusters that are each associated with a class of content items, and the points are further located within the clusters based on attributes of the content items                                    720

identify one or more second content items that are similar to the first content item based on the location of the first point, particular clusters that the one or more second points corresponding to the one or more second content items are located in, and the locations of the one or more second points corresponding to the one or more second content items within the particular clusters.                                    730

*FIG. 7*

COMPUTER SYSTEM 800

812

PROCESSOR 802

MEMORY 804

STORAGE 806

I/O INTERFACE 808

COMMUNICATION INTERFACE 810

*FIG. 8*

Europäisches
Patentamt

European
Patent Office

Office européen
des brevets

# EUROPEAN SEARCH REPORT

Application Number

EP 16 16 9502

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | PENGCHENG WU ET AL: "Online multimodal deep similarity learning with application to image retrieval", PROCEEDINGS OF THE 21ST ACM INTERNATIONAL CONFERENCE ON MULTIMEDIA, MM '13, 1 January 2013 (2013-01-01), pages 153-162, XP055335747, New York, New York, USA DOI: 10.1145/2502081.2502112 ISBN: 978-1-4503-2404-5 * the whole document * | 1-15 | INV. G06F17/30 G06Q50/00 G06K9/62 |
| X | US 2012/294540 A1 (SUN JIAN [CN] ET AL) 22 November 2012 (2012-11-22) * paragraph [0012] - paragraph [0019] * * paragraph [0034] - paragraph [0036] * | 1-15 | |
| X | US 8 909 563 B1 (JING YUSHI [US] ET AL) 9 December 2014 (2014-12-09) * column 2, line 51 - column 7, line 26 * * column 10, line 52 - column 11, line 5 * | 1-15 | TECHNICAL FIELDS SEARCHED (IPC) |
| X | US 6 347 313 B1 (MA WEI-YING [US] ET AL) 12 February 2002 (2002-02-12) * column 4, line 18 - column 5, line 42 * * column 9, line 42 - column 11, line 33 * | 1-15 | G06K G06F G06Q |

The present search report has been drawn up for all claims

| Place of search | Date of completion of the search | Examiner |
|---|---|---|
| The Hague | 18 January 2017 | van Praagh, Kay |

EPO FORM 1503 03.82 (P04C01)

## ANNEX TO THE EUROPEAN SEARCH REPORT
## ON EUROPEAN PATENT APPLICATION NO.

EP 16 16 9502

This annex lists the patent family members relating to the patent documents cited in the above-mentioned European search report.
The members are as contained in the European Patent Office EDP file on
The European Patent Office is in no way liable for these particulars which are merely given for the purpose of information.

18-01-2017

| Patent document cited in search report | | Publication date | Patent family member(s) | | Publication date |
|---|---|---|---|---|---|
| US 2012294540 | A1 | 22-11-2012 | NONE | | |
| US 8909563 | B1 | 09-12-2014 | US<br>US | 8909563 B1<br>2015142708 A1 | 09-12-2014<br>21-05-2015 |
| US 6347313 | B1 | 12-02-2002 | NONE | | |

EPO FORM P0459

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 62251352 A